# EUROPEAN PATENT APPLICATION

(11) **EP 3 581 450 A1**
(43) Date of publication of application: **18.12.2019**
(21) Application number: 18766593.0
(22) Date of filing: 16.02.2018
(51) Int. Cl.: B60W 30/10, B60W 30/16

(54) **DRIVING ASSIST CONTROL DEVICE**

(30) Priority: 17.03.2017 JP 2017052140
(71) Applicant: Mazda Motor Corporation, Aki-gun, Hiroshima 730-8670 (JP)
(72) Inventor: OHMURA, Hiroshi, Aki-gun Hiroshima 730-8670 (JP); IIMURA, Sahori, Aki-gun Hiroshima 730-8670 (JP)
(74) Representative: Müller-Boré & Partner Patentanwälte PartG mbB
(86) International application number: PCT/JP2018/005544
(87) International publication number: WO 2018/168330

(57) **Abstract**

Disclosed is a driving support control device (ECU) (10) capable of controlling a vehicle (1) in accordance with any one selected from plural driving support modes by a driver. The ECU (10) is configured to temporally repeatedly calculate a target traveling course (first to third traveling courses R1 to R3) along which the vehicle (1) should travel, and to, in a preceding vehicle following mode, execute control of causing the vehicle (1) to travel on and along the target traveling course, wherein the ECU (10) is operable, when the target traveling course includes a section having a curvature radius r less than a given curvature radius rₜₕ, to prohibit transition to the preceding vehicle following mode, even if the driver selects the preceding vehicle following mode.

## Description

### TECHNICAL FIELD

The present invention relates to a driving support control device, and more particularly to a driving support control device capable of providing plural driving support modes.

### BACKGROUND ART

In recent years, a driving support control system has being becoming increasingly equipped in a vehicle to provide a given driving support mode to a driver (see, for example, the following Patent Document 1). A driving support control system described in the Patent Document 1 is configured to, in response to switch manipulation by a driver, cause switching from a manual driving mode (off mode) to an automatic driving mode (driving support mode). This system is configured to permit such a mode transition when a vehicle satisfies a given condition. Examples of the given condition include a condition that no modification is made in the vehicle, and a condition that a current vehicle speed does not exceed a legal speed limit.

### CITATION LIST

### [Patent Document]

Patent Document 1: JP 2016-088334A

### SUMMARY OF INVENTION

### [Technical Problem]

However, a recent driving support control system has become possible to provide plural driving support modes. Thus, there is a problem that it is necessary to set an appropriate switching condition not only for the aforementioned switching from the off mode to the driving support mode but also for switching among the plural driving support modes, in consideration of safety.

Further, as new insight, the present inventors have discovered that a driving mode switching which is safe and free of stressing a driver cannot be ensured without setting a switching condition while taking into account a traveling course to be set in each driving support mode.

The present invention has been made to solve the above problems, and an object thereof is to provide a driving support control device capable of enabling a safe mode transition during switching among plural driving support modes.

### [Solution to Technical Problem]

In order to achieve the above object, the present invention provides a driving support control device capable of controlling a vehicle in accordance with any one selected from plural driving support modes by a driver. The driving support control device is configured to temporally repeatedly calculate a target traveling course along which the vehicle should travel, and to, in a given one of the driving support modes, execute control of causing the vehicle to travel on and along the target traveling course, wherein the driving support control device is operable, when the target traveling course includes a section having a curvature radius less than a given curvature radius, to prohibit transition to the given driving support mode, even if the driver selects the given driving support mode.

In the driving support control device of the present invention having the above feature, when, at a time of mode switching to the given driving support mode in which control of causing the vehicle to travel on and along a target traveling course is executed, the target traveling course after the switching includes a section having a curvature radius less than the given curvature radius, mode transition is prohibited. Thus, when the driver selects the given driving support mode in a situation where the vehicle is traveling at a position just before a curve section of a traveling road or on the curve section, a case can occur in which switching to the selected driving support mode is disabled, in view of safety. That is, the mode transition is permitted only when it is determined that the vehicle can travel safely after the mode transition.

Specifically, in the present invention, the size of the curvature radius in the target traveling course is evaluated, instead of evaluating the size of a curvature radius of the traveling road. That is, in the present invention, permissibility of the mode transition is determined, based on the size of the curvature radius in the calculated target traveling course. This means that, even if the traveling road includes a tight curve section having a relatively small curvature radius, the mode transition is not always prohibited. Thus, in the present invention, by prohibiting the mode transition at the time when the driver selects the driving support mode, it is possible to reduce the probability of stressing the driver. As above, the present invention makes it possible to ensure safety and improve usability, in driving support mode switching processing.

In a specific embodiment of the present invention, the transition to the given driving support mode is prohibited when the target traveling course includes a section having a curvature radius less than the given curvature radius in a situation where the vehicle is traveling at a position just before a curve section of a traveling road or on the curve section.

In a specific embodiment of the present invention, the target traveling course is a traveling course set to maintain traveling within a traveling road.

In the above embodiment, the target traveling course is preferably set to pass through an in-side of a curve section of the traveling road.

According to this feature, the curvature radius of the target traveling course can be set to a larger value than a curvature radius based on the shape of the traveling road. This makes it possible to increase the probability of the mode transition, even in a situation where the curvature radius of the traveling road is relatively small.

In a specific embodiment of the present invention, the driving support control device is operable, in response to a given manipulation by the driver, to start mode switching processing for switching to the driving support mode selected by the driver.

In a specific embodiment of the present invention, the driving support control device is operable, when the target traveling course includes a section having a curvature radius less than the given curvature radius, at a time when the given driving support mode is selected during execution of a driving support mode other than the given driving support mode, to prohibit transition to the given driving support mode.

### [Effect of Invention]

The driving support control device of the present invention makes it possible to enable a safe mode transition during switching among plural driving support modes.

### BRIEF DESCRIPTION OF DRAWINGS

FIG. 1 is a configuration diagram of a driving support control system according to one embodiment of the present invention.
FIG. 2 is an explanatory diagram of a first traveling course in this embodiment.
FIG. 3 is an explanatory diagram of a second traveling course in this embodiment.
FIG. 4 is an explanatory diagram of a third traveling course in this embodiment.
FIG. 5 is an explanatory diagram showing a relationship between a driving support mode and a target traveling course, in this embodiment.
FIG. 6 is a processing flow of driving support control in this embodiment.
FIG. 7 is an explanatory diagram of mode switching processing in a curve section in this embodiment.
FIG. 8 is a processing flow during switching to a preceding vehicle following mode in this embodiment.

### DESCRIPTION OF EMBODIMENTS

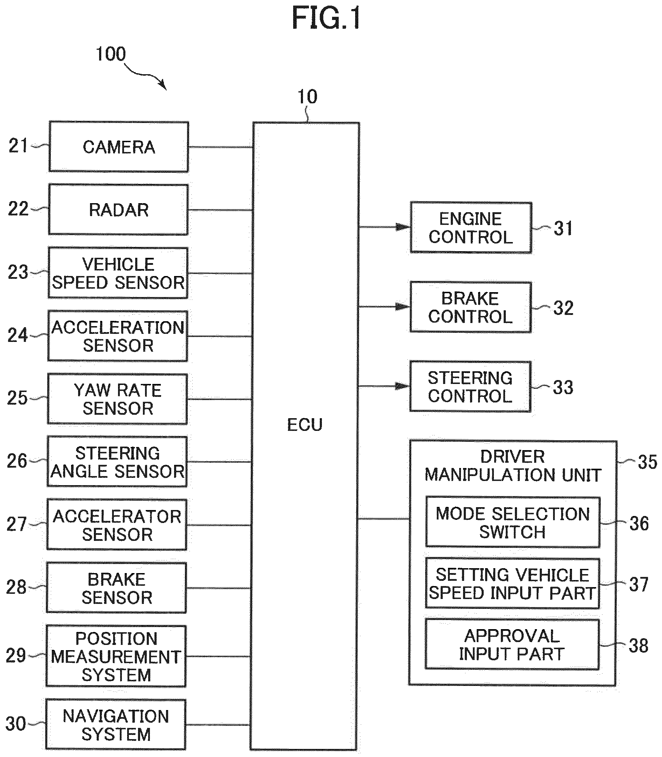

With reference to the accompanying drawings, a driving support control system according to one embodiments of the present invention will now be described. First of all, the configuration of the driving support control system will be described with reference to FIG. 1. FIG. 1 is a configuration diagram of the driving support control system.

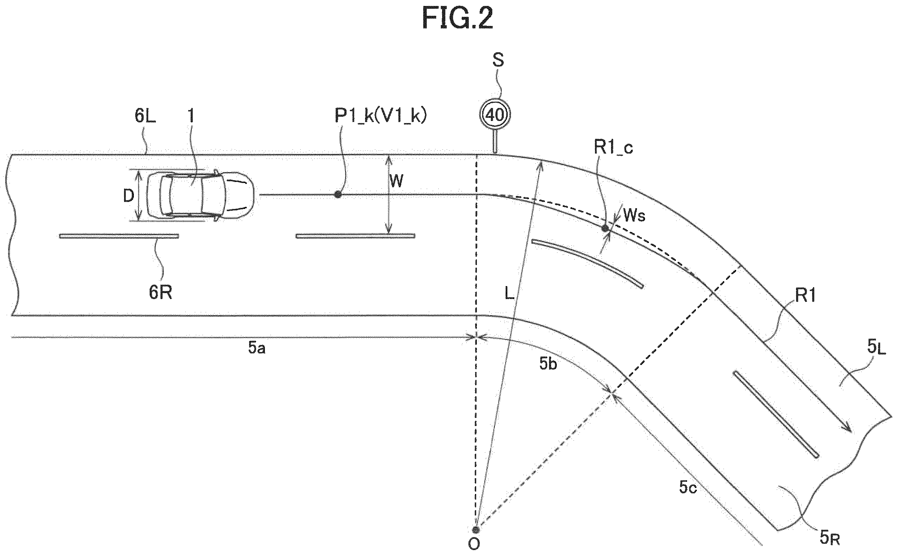

The driving support control system 100 according to this embodiment is configured to provide different drive support controls to a vehicle 1 (see FIG. 2) in accordance with plural driving support modes, respectively. A driver can select a desired one of the plural driving support modes.

As shown in FIG. 1, the driving support control system 100 is equipped in the vehicle 1, and comprises a driving support control device (ECU) 10, plural sensors and switches, plural control sub-systems, and a driver manipulation unit 35 for allowing user input regarding the driving support modes. The plural sensors and switches include: a vehicle-mounted camera 21; a millimeter-wave radar 22; plural behavior sensors (a vehicle speed sensor 23, an acceleration sensor 24, and a yaw rate sensor 25) and plural behavior switches (a steering angle sensor 26, an accelerator sensor 27, and a brake sensor 28), a position measurement system 29, and a navigation system 30. Further, the plural control sub-systems include an engine control system 31, a brake control system 32 and a steering control system 33.

Other examples of the sensors and switches may include a peripheral sonar for measuring the distance and position of a surrounding structural object with respect to the vehicle 1, a corner radar for measuring a proximity of a surrounding structural object with respect to each of four corners of the vehicle 1, and an inner camera for taking an image of the inside of a passenger compartment of the vehicle 1. In this case, the ECU 10 is configured to receive measurement signals/data from these sensors and switches.

The driver manipulation unit 35 is provided in the passenger compartment of the vehicle 1 such that it can be manipulated by the driver, and comprises: a mode selection switch 36 for selecting a desired driving support mode from the plural driving support modes; a setting vehicle speed input part 37 for inputting a setting vehicle speed in accordance with the selected driving support mode; and an approval input part 38 for performing an approval input manipulation regarding a legal speed limit. The driver manipulation unit 35 may further comprise a setting inter-vehicle distance input part for setting an inter-vehicle distance between the vehicle 1 and a preceding vehicle. In response to manipulation of the mode selection switch 36 by the driver, a driving support mode selection signal according to the selected driving support mode is output.

The setting vehicle speed input part 37 comprises a vehicle speed change button, a setup vehicle speed display, and a confirmation button. The driver can manipulate the vehicle speed change button such that a desired setup vehicle speed is displayed on the setup vehicle speed display. Through this manipulation, a setup vehicle speed signal representing the displayed setup vehicle speed is output.

The approval input part 38 comprises a legal speed limit display, and an approval button. The driver can push down the approval button after confirming that a legal speed limit displayed on the legal speed limit display is coincident with a speed designated by a speed sign outside the vehicle 1. Through this manipulation, an approval signal is output.

The ECU 10 is composed of a computer comprising a CPU, a memory storing therein various programs, and an input/output device. The ECU 10 is configured to be operable, based on the driving support mode selection signal, the setting vehicle speed signal and the approval signal each received from the driver manipulation unit 35, and signals received from the plural sensors and switches, to output request signals for appropriately operating an engine system, a brake system and a steering system, respectively, to the engine control system 31, the brake control system 32 and the steering control system 33.

The vehicle-mounted camera 21 is operable to take images around the vehicle 1 and output image data about the taken images. The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Alternatively or additionally, the ECU 10 may be configured to acquire information regarding such an object from outside via an in-vehicle communication device.

The millimeter-wave radar 22 is a measurement device for measuring the position and speed of the object (particularly, a preceding vehicle, a parked vehicle, a pedestrian, an obstacle or the like), and is operable to transmit a radio wave (transmitted wave) forwardly with respect to the vehicle 1 and receive a reflected wave produced as a result of reflection of the transmitted wave by the object. Then, the millimeter-wave radar 22 is operable, based on the transmitted wave and the received wave, to measure a distance between the vehicle 1 and the object, i.e., a vehicle-object distance, (e.g., inter-vehicle distance) and/or a relative speed of the object with respect to the vehicle 1. In this embodiment, instead of the millimeter-wave radar 22, a laser radar, an ultrasonic sensor or the like may be used to measure the vehicle-object distance and/or the relative speed. Further, the position and speed measurement device may be composed using a plurality of other sensors.

The vehicle speed sensor 23 is operable to detect an absolute speed of the vehicle 1.

The accelerator sensor 24 is operable to detect an acceleration (a longitudinal acceleration/deceleration in a longitudinal (forward-rearward) direction, and a lateral acceleration in a lateral (width) direction) of the vehicle 1.

The yaw rate sensor 25 is operable to detect a yaw rate of the vehicle 1.

The steering angle sensor 26 is operable to detect a turning angle (steering angle) of a steering wheel of the vehicle 1.

The accelerator sensor 27 is operable to detect a depression amount of an accelerator pedal.

The brake sensor 28 is operable to detect a depression amount of a brake pedal.

The position measurement system 29 is composed of a GPS system and/or a gyro system, and is operable to detect the position of the vehicle 1 (current vehicle position information).

The navigation system 30 stores therein map information, and is operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in the travelling direction). The map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction.

Next, the driving support modes in the driving support control system 100 according to this embodiment will be described. In this embodiment, the driving support modes consist of four modes (a preceding vehicle following mode, an automatic speed control mode, a speed limiting mode, and a basic control mode).

Firstly, the preceding vehicle following mode is a mode in which the vehicle 1 is basically controlled to travel following a preceding vehicle, while maintaining a given inter-vehicle distance between the vehicle 1 and the preceding vehicle, and involves automatic steering control, automatic speed control (engine control and/or brake control), automatic obstacle avoidance control (the speed control and the steering control) to be executed by the driving support control system 100.

In the preceding vehicle following mode, the steering control and the speed control are performed in different manners, depending on detectability of opposed lane edges, and the presence or absence of a preceding vehicle. Here, the term "opposed lane edges" means opposed edges (a demarcation line such as a white road line, a road edge, an edge stone, a median strip, a guardrail or the like) of a lane in which the vehicle 1 is traveling, i.e., borderlines with respect to a neighboring lane and sidewalk, or the like. The ECU 10 is operable, when serving as a traveling road edge detection part, to detect the opposed lane edges from the image data about the images taken by the vehicle-mounted camera 21. Alternatively, the ECU 10 may be configured to detect the opposed lane edges from the map information of the navigation system 30. However, for example, in a situation where the vehicle 1 is traveling on the plain on which there is no traffic lane, instead of on a well-maintained road, or in a situation where reading of the image data from the vehicle-mounted camera 21 is bad, there is a possibility of failing to detect the opposed lane edges.

As above, in this embodiment, the ECU 10 is configured to serve as the traveling road edge detection part. Alternatively, the vehicle-mounted camera 21 may be configured to detect the opposed lane edges to serve as the traveling road edge detection part, or may be configured to detect the opposed lane edges in cooperation with the ECU 10 to serve as the traveling road edge detection part.

Further, the ECU 10 is operable, when serving as a preceding vehicle detection part, to detect a preceding vehicle, based on the image data from the vehicle-mounted camera 21, and the measurement data from the millimeter-wave radar 22. Specifically, the ECU 10 is operable to detect a second vehicle which is traveling ahead of the vehicle 1, as a preceding vehicle, based on the image data from the vehicle-mounted camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

As above, in this embodiment, the ECU 10 is configured to serve as the preceding vehicle detection part. Alternatively, the vehicle-mounted camera 21 may be configured to detect a second vehicle which is traveling ahead of the vehicle 1 to serve as the preceding vehicle detection part, or the preceding vehicle detection part may be composed of not only the ECU 10 but also the vehicle-mounted camera 21 and the millimeter-wave radar 22.

In the case where the opposed lane edges are detected, the steering control is performed such that the vehicle 1 is steered to travel along approximately the middle of the lane, and the speed control is performed such that the vehicle 1 maintains a setup vehicle speed (constant speed) preliminarily set by the driver through the use of the setting vehicle speed input part 37 or by the system 100 based on given processing. Here, when the setup vehicle speed is greater than a speed limit (which is determined according to a speed sign or the curvature of a curve), priority is given to the speed limit, so that the vehicle speed of the vehicle 1 is limited to the speed limit. When the speed limit is determined according to the curvature of a curve, it is calculated by a given calculation formula, wherein it is set to a lower value as the curvature of the curve becomes larger (a curvature radius of the curve becomes smaller).

Further, when the setup vehicle speed of the vehicle 1 is greater than the vehicle speed of a preceding vehicle, the speed control is performed such that the vehicle 1 follows the preceding vehicle while maintaining an inter-vehicle distance appropriate to a follow-up vehicle speed. Then, when the preceding vehicle being followed by the vehicle 1 disappears from ahead of the vehicle 1 due to lane change or the like, the speed control is performed such that the vehicle 1 maintains the setup vehicle speed, again.

On the other hand, in a case where the opposed lane edges are not detected, and there is a preceding vehicle, the steering control is performed such that the vehicle 1 follows a traveling trajectory of the preceding vehicle, and the speed control is performed such that the vehicle 1 follows the speed on the traveling trajectory of the preceding vehicle.

Further, in a case where the opposed lane edges are not detected, and there is not any preceding vehicle (it is unable to detect any demarcation line and follow any preceding vehicle), it is unable to determine a traveling position on a traveling road. In this case, the driver manually controls vehicle steering and vehicle speed by manipulating the steering wheel, and the accelerator pedal and/or brake pedal so as to maintain or change a current traveling behavior (steering angle, yaw rate, vehicle speed, acceleration/deceleration, or the like) according to the will of the driver.

Secondly, the automatic speed control mode is a mode in which the speed control is performed such that the vehicle 1 maintains a given setup vehicle speed (constant speed) preliminarily set by the driver or the system 100, and involves the automatic speed control (the engine control and/or the brake control) to be executed by the driving support control system 100, wherein, basically, the automatic steering control is not performed. However, in a situation where the vehicle 1 deviates from a traveling road (lane) or is likely to collide with an obstacle (neighboring vehicle or structural object), deceleration control appropriate to a distance with the obstacle and the automatic steering control are executed by the driving support control system 100.

In this automatic speed control mode, although the vehicle 1 is controlled to travel to maintain the setup vehicle speed, the driver can increase the vehicle speed beyond the setup speed by depressing the accelerator pedal (accelerator override control). Further, when the driver performs brake manipulation, the highest priority is given to the will of the driver, and therefore the vehicle 1 is decelerated from the setup vehicle speed. In the automatic speed control mode, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed.

Thirdly, the speed limiting mode is a mode in which the speed control is performed to prevent the vehicle speed of the vehicle 1 from exceeding a speed limit (legal speed limit) designated by a speed sign, and involves the automatic speed control (engine control) to be executed by the driving support control system 100. With respect to the legal speed limit, the ECU 10 may be configured to subject image data about an image of a speed sign or a speed marking on a road surface taken by the vehicle-mounted camera 21, to image recognition processing, to identify the legal speed limit, or may be configured to receive information regarding the legal speed limit from outside via a wireless communication. This legal speed limit is input from the ECU 10 into the driver manipulation unit 35, and displayed on the legal speed limit display of the approval input part 38. In the speed limiting mode, even when the driver depresses the accelerator pedal so as to increase the vehicle speed beyond the limiting speed, the vehicle speed of the vehicle 1 is increased only up to the limiting speed.

Fourthly, the basic control mode is a mode (off mode) in which none of the driving support modes is selected through the driver manipulation unit 35, and the automatic steering control and speed control are not executed by the driving support control system 100. However, the basic control mode is configured to execute an automatic anti-collision control. In this anti-collision control, when the vehicle 1 encounters a situation where it is likely to collide with a preceding vehicle or the like, the brake control is automatically executed to avoid the collision. It should be noted that the anti-collision control is also executed in the preceding vehicle following mode, the automatic speed control mode, and the speed limiting mode.

Further, the obstacle avoidance control (only the speed control, or the speed control and the steering control) is also executed in the automatic speed control mode, the speed limiting mode and the basic control mode.

Next, with reference to FIGS. 2 to 4, plural traveling courses to be calculated in the driving support control system 100 according to this embodiment will be described. FIGS. 2 to 4 are explanatory diagrams of first to third traveling courses, respectively. In this embodiment, the ECU 10 is configured to calculate the first to third traveling courses R1 to R3 temporally repeatedly (e.g., at intervals of 0.1 sec). In this embodiment, the ECU 10 is operable, based on information from the sensors and others, to calculate a traveling course in a period from a present time through until a given time period (e.g., 2 to 4 sec) elapses. The traveling course Rx (where x = 1, 2, 3) is defined by a target position (Px_k) and a target speed (Vx_k) (where k = 0, 1, 2, ----, n) of the vehicle 1 on the traveling course.

Each of the traveling courses (first to third traveling courses) in FIGS. 2 to 4 is calculated based on the shape of a traveling road on which the vehicle 1 is traveling, the traveling trajectory of a preceding vehicle, the traveling behavior of the vehicle 1, and the setup vehicle speed, without taking into account obstacle information regarding an obstacle (including a parked vehicle, a pedestrian and the like) on the traveling road or around the traveling road (i.e., information regarding an obstacle whose situation can vary temporally), and traveling situation change information regarding a change in traveling situation. The traveling situation change information may include traveling regulation information regarding traveling regulation according to traffic regulations (a traffic light, a traffic sign and the like) (i.e., information detectable on site during traveling, instead of the map information), and lane change request information according to the will of the driver (the will to change a course, such as manipulation of a winker (turning signal)). As above, in this embodiment, the traveling course is calculated without taking into account the obstacle information, the traveling regulation information and the like, so that it is possible to keep down the overall calculation load for calculating the plural traveling courses.

For the sake of facilitating understanding, the following description will be made based on an example where each of the traveling courses is calculated on the assumption that the vehicle 1 travels on a road 5 consisting of a straight section 5a, a curve section5b, a straight section 5c. The road 5 comprises left and right lanes 5L, 5R. Assume that, at a present time, the vehicle 1 travels on the lane 5L in the straight section 5a.

As shown in FIG. 2, the first traveling course R1 is set, by a distance corresponding to a given time period, to enable the vehicle 1 to maintain traveling within the lane 5L serving as the traveling road, in conformity to the shape of the road 5. Specifically, the first traveling course R1 is set, in each of the straight sections 5a, 5c, to enable the vehicle 1 to maintain traveling along approximately the widthwise middle of the lane 5L, and set, in the curve section 5b, to enable the vehicle 1 to travel on an inner side or in-side (on the side of a center O of a curvature radius L of the curve section 5b) with respect to the widthwise middle of the lane 5.

The ECU 10 is operable to execute the image recognition processing for image data about images around the vehicle 1 taken by the vehicle-mounted camera 21, to detect opposed lane edges 6L, 6R. The opposed lane edges are a demarcation line (white road line or the like), and a road shoulder or the like, as mentioned above. Further, the ECU 10 is operable, based on the detected opposed lane edges 6L, 6R, to calculate a lane width W of the lane 5L and the curvature radius L in the curve section 5b. Alternatively, the ECU 10 may be configured to acquire the lane width W and the curvature radius L from the map information of the navigation system 30. Further, the ECU 10 is operable to read, from the image data, a speed limit indicated by a speed sign S or on the road surface. Alternatively, the ECU 10 may be configured to acquire the speed limit from outside via a wireless communication, as mentioned above.

With regard to the straight sections 5a, 5c, the ECU 10 is operable to set a plurality of target positions P1_k of the first traveling course R1 to enable a widthwise middle (e.g., the position of the center of gravity) of the vehicle 1 to pass through the widthwise middle between the opposed lane edges 6L, 6R. In this embodiment, the ECU 10 is operable to set the first traveling course R1 to enable the vehicle 1 to travel along the middle of the lane in each of the straight sections, as mentioned above. Alternatively, the ECU 10 may be configured to set the first traveling course R1 while reflecting a driving characteristic (preference or the like) of the driver, for example, such that the first traveling course R1 extends along a line adjacent to the middle of the lane and offset in the width direction by a given shift amount (given distance) with respect to the middle of the lane.

On the other hand, with respect to the curve interval 5b, the ECU 10 is operable to maximally set a displacement amount Ws toward the in-side from the widthwise middle position of lane 5L at a longitudinal middle position P1_c of the curve interval 5b. This displacement amount Ws is calculated based on the curvature radius L, the lane width W, and a width dimension D of the vehicle 1 (prescribed value stored in the memory of the ECU 10). Then, the ECU 10 is operable to set a plurality of target positions P1_k of the first traveling course R1 in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a 5c at positions just before entering the curve section 5b and just after exiting the curve section 5b.

Basically, a target speed V1_k at the target position P1_k of the first traveling course R1 is set to a given setup vehicle speed (constant speed) preliminarily set by the driver through the use of the setting vehicle speed input part 37 of the driver manipulation unit 35 or by the system 100. However, when this setup vehicle speed exceeds the speed limit acquired from a speed sign or the like, or the speed limit determined according to the curvature radius L of the curve section 5b, the target speed V1_k at the target position P1_k on the traveling course is limited to a lower one of the two speed limits. Further, the ECU 10 is operable to correct the target position P1_k and the target speed V1_k, according to a current behavior state (i.e., vehicle speed, acceleration/deceleration, yaw rate, steering angle, lateral acceleration, etc.) of the vehicle 1. For example, when a current value of the vehicle speed is largely different from the setup vehicle speed, the target speed is corrected so as to enable the vehicle speed to come close to the setup vehicle speed.

Basically, the first traveling course R1 is used in the situation where the opposed lane edges are detected. Thus, in a situation where the opposed lane edges are not detected, the first traveling course R1 needs not be calculated. However, in preparation for a situation where the first traveling course R1 is erroneously selected even though the opposed lane edges are not detected, the first traveling course R1 may be calculated in the following alternative manner.

In such a situation, the ECU 10 is operable, assuming that the vehicle 1 travels along the middle of the lane 5L, set virtual opposed lane edges, using the steering angle or yaw rate according to the vehicle speed of the vehicle 1. Then, the ECU 10 is operable, based on the virtually-set opposed lane edges, to calculate the first traveling course to enable the vehicle 1 to travel along the middle of the lane, in each of the straight sections and travel on the in-side of the lane, in the curve section.

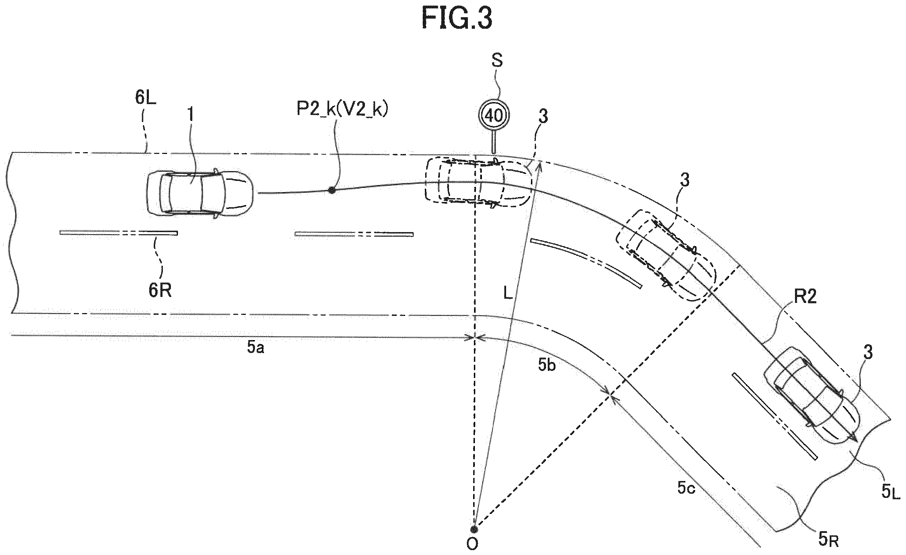

As shown in FIG. 3, the second traveling course R2 is set, by a distance corresponding to a given time period, to enable the vehicle 1 to follow a traveling trajectory of a preceding vehicle 3. The ECU 10 is operable to continuously calculate the position and speed of the preceding vehicle 3 on the lane 5L on which the vehicle 1 is traveling, based on the image data from the vehicle-mounted camera 21, the measuring data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (a target position P2_k and a target speed V2_k). The second traveling course R2 is basically selected in the situation where the opposed lane edges are not detected (therefore, in FIG. 3, load lines are indicated by the two-dot chain lines for the sake of facilitating understanding).

In this embodiment, the second traveling course R2 is basically calculated in the situation where a preceding vehicle is detected. Thus, in a situation where no preceding vehicle is detected, the second traveling course R2 needs not be calculated. However, in preparation for a situation where the second traveling course R2 is erroneously selected even though no preceding vehicle is detected, the second traveling course R2 may be calculated in the following alternative manner.

In such a situation, the ECU 10 is operable, assuming that a preceding vehicle is traveling at a position ahead of the vehicle 1 by a given distance according to the vehicle speed of the vehicle 1. Further, assume that this virtual preceding vehicle has the same traveling behavior (vehicle speed, steering angle, yaw rate, etc.) as that of the vehicle 1. Then, the ECU 10 is operable to calculate the second traveling course R2 to follow the virtual preceding vehicle.

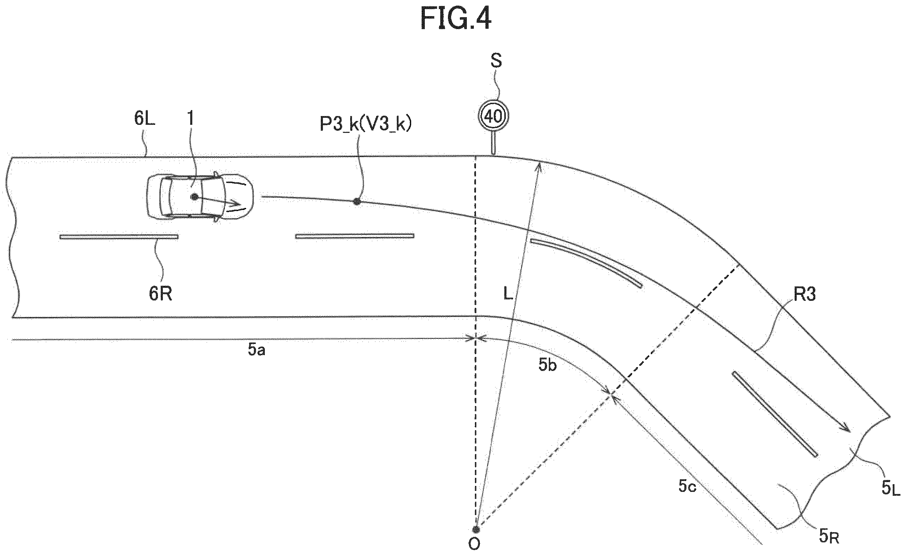

As shown in FIG. 4, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The ECU 10 is operable, based on the steering angle, the yaw rate and the lateral acceleration of the vehicle 1, to calculate a target position P3_k of the third traveling course R3 having the distance corresponding to the given time period. However, in the situation where the opposed lane edges are detected, the ECU 10 is operable to correct the target position P3_k so as to prevent the calculated third traveling course R3 from coming close to or intersecting with any of the lane edges.

Further, the ECU 10 is operable, based on current values of the vehicle speed and the acceleration/deceleration of the vehicle 1, to calculate a target speed V3_k of the third traveling course R3 having the distance corresponding to the given time period. Here, when the target speed V3_k exceeds the speed limit acquired from the speed sign S or the like, the target speed V3_k may be corrected so as not to exceed the speed limit.

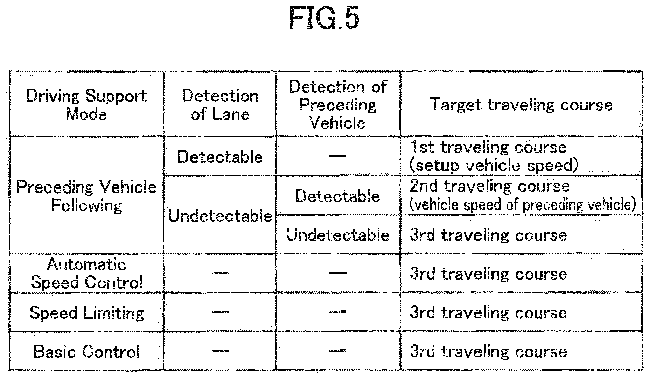

Next, with reference to FIG. 5, a relationship between the driving support mode and the target traveling course in the driving support control system 100 will be described. FIG. 5 is an explanatory diagram showing the relationship between the driving support mode and the target traveling course. In this embodiment, the driving support control system 100 is configured such that, when the driver manipulates the mode selection switch 36 to select one of the driving support modes, the ECU 10 operates to select one of the first to third traveling courses R1 to R3 according to the measurement data from sensors and others. That is, in this embodiment, even when the driver selects a certain one of the driving support modes, the same traveling course is not always applied, but one of the traveling courses appropriate to a current traveling state is applied.

When the opposed lane edges are detected in a situation where the preceding vehicle following mode is selected, the first traveling course is applied, irrespective of the presence or absence of a preceding vehicle. In this case, the setup vehicle speed set through the use of the setting vehicle speed input part 37 is used as the target speed.

On the other hand, when the opposed lane edges are not detected but a preceding vehicle is detected in the situation where the preceding vehicle following mode is selected, the second traveling course is applied. In this case, the target speed is set according to the vehicle speed of the preceding vehicle. Further, when neither the opposed lane edges nor a preceding vehicle is detected in the situation where the preceding vehicle following mode is selected, the third traveling course is applied.

In the automatic speed control mode which is a mode in which the speed control is automatically executed, as mentioned above, the setup speed set through the use of the setting vehicle speed input part 37 is used as the target speed. Further, the driver manually controls vehicle steering by manipulating the steering wheel. Thus, although the third traveling course is applied, the vehicle 1 is likely not to travel along the third traveling course, depending on the driver's manipulation (of the steering wheel and/or the brake pedal).

Further, in a situation where the speed limiting mode is selected, the third traveling course is applied. In the speed limiting mode which is a mode in which the speed control is automatically executed, as mentioned above, the target speed is set according to the depression amount of the accelerator pedal by the driver, within the speed limit (maximum speed). Further, the driver manually controls vehicle steering by manipulating the steering wheel. Thus, although the third traveling course is applied, the vehicle 1 is likely not to travel along the third traveling course, depending on the driver's manipulation (of the steering wheel the brake pedal, and/or the accelerator pedal), as with the automatic speed control mode.

Further, in a situation where the basic control mode (off mode) is selected, the third traveling course is applied. The basic control mode is basically the same as the speed limiting mode in a state in which no speed limit is set.

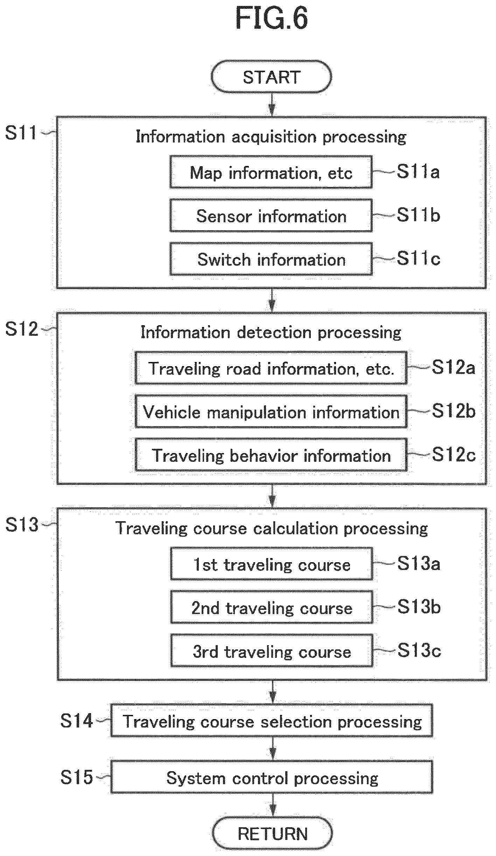

Next, with respect to FIG. 6, a processing flow of driving support control in the driving support control system 100 according to this embodiment will be described. FIG. 6 is the processing flow of the driving support control.

The ECU 10 operates to repeatedly execute the processing flow in FIG. 6 at intervals of a given time period (e.g., 0.1 seconds). First of all, the ECU 10 operates to execute information acquisition processing (S11). In the information acquisition processing, the ECU 10 operates to: acquire the current vehicle position information and the map information, from the position measurement system 29 and the navigation system 30 (S11a); acquire sensor information from the vehicle-mounted camera 21, the millimeter-wave radar 22, the vehicle speed sensor 23, the acceleration sensor 24, the yaw rate sensor 25, the driver manipulation unit 35 and others (S11b); and acquire switch information from the steering angle sensor 26, the accelerator sensor 27, the brake sensor 28, the turning signal sensor and others (S11c).

Subsequently, the ECU 10 operates to execute given information detection processing (S12), using a variety of information acquired in the information acquisition processing (S11). In the information detection processing, the ECU 10 operates to detect, from the current vehicle position information, the map information and the sensor information, the traveling road information regarding a shape of a traveling road around and ahead of the vehicle 1 (the presence or absence of a straight section and a curve section, the length of each of the sections, the curvature radius of the curve section, a lane width, the positions of opposed lane edges, the number of lanes, the presence or absence of an intersection, a speed limit determined by the curvature of a curve, etc.), the traveling regulation information (legal speed limit, red light, etc.), the obstacle information (the presence or absence , the position, the speed, etc., of a preceding vehicle or an obstacle), the preceding vehicle trajectory information (the position and the vehicle speed of a preceding vehicle) (S12a).

Further, the ECU 10 operates to: detect, from the switch information, vehicle manipulation information (the steering angle, the accelerator depression amount, the brake pedal depression amount, etc.) (S12b); and detect, from the switch information and the sensor information, traveling behavior information regarding the behavior of the vehicle 1 (the vehicle speed, the acceleration/deceleration, the lateral acceleration, the yaw rate, etc.) (S12c).

Subsequently, the ECU 10 operates to execute traveling course calculation processing, based on information obtained by calculation (S13). In the traveling course calculation processing, a first traveling course calculation processing (S13a), a second traveling course calculation processing (S13b) and a third traveling course calculation processing (S13c) are executed in the aforementioned manner.

Specifically, in the first traveling course calculation processing, the ECU 10 operates to calculate, based on the setup vehicle speed, the opposed lane edges, the lane width, the speed limit, the (actual) vehicle speed, the acceleration/deceleration, the yaw rate, the steering angle, the lateral acceleration, etc., the traveling course R1 (target position P1_k and target speed V1_k) by a distance corresponding to a given time period (e.g., 2 to 4 sec), so as to enable the vehicle 1 to travel along approximately the middle of a lane in a straight section, and travel on the in-side of a curve in a curve section to have a larger turning radius, wherein a lowest one of the setup vehicle speed, a speed limit designated by a traffic sign, and a speed limit determined by the curvature of the curve is set as the maximum speed.

In the second traveling course calculation processing, the ECU 10 operates to calculate, based on the preceding vehicle trajectory information (position and speed) of the preceding vehicle acquired from the sensor information, etc., the traveling course R2 by a distance corresponding to a given time period, so as to enable to the vehicle 1 to follow the behavior (position and speed) of the preceding vehicle, while maintaining a given inter-vehicle distance between the preceding vehicle and the vehicle 1, i.e., behind the preceding vehicle by a time necessary to travel over the inter-vehicle distance.

In the third traveling course calculation processing, the ECU 10 operates to calculate the traveling course R3 estimated from a current behavior of the vehicle 1 based on the vehicle manipulation information, the traveling behavior information, etc., by a distance corresponding to a given time period.

Subsequently, the ECU 10 operates to execute the traveling course selection processing for selecting one target traveling course from the calculated three traveling courses (S14). In this processing, the ECU 10 operates to select the one target traveling course, based on the driving support mode selected by the driver through the use of the mode selection switch 36, detachability of the opposed lane edges, and the presence or absence of a preceding vehicle (see FIG. 5), as described above.

Subsequently, the ECU 10 operates to output, according to the selected driving support mode, a request signal to a concerned control sub-system (the engine control system 31, the brake control system 32 and/or the steering control system 33) so as to enable the vehicle 1 to travel on the finally calculated traveling course (S16).

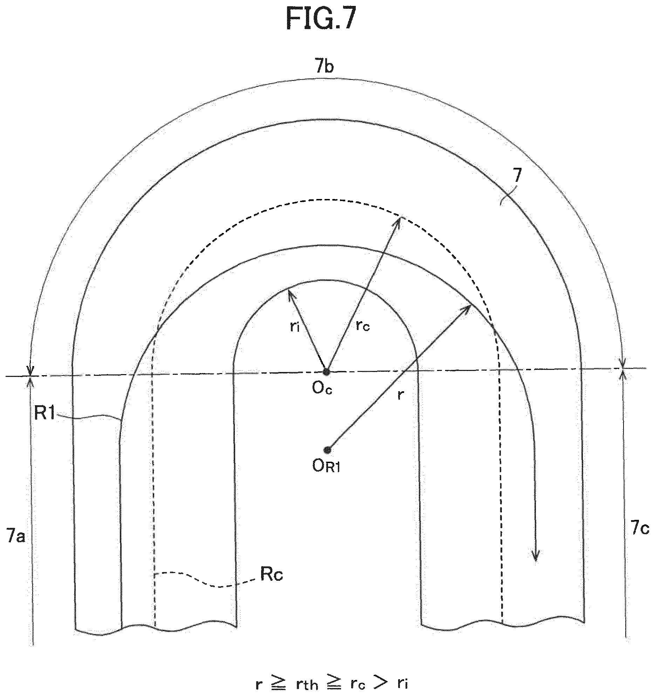

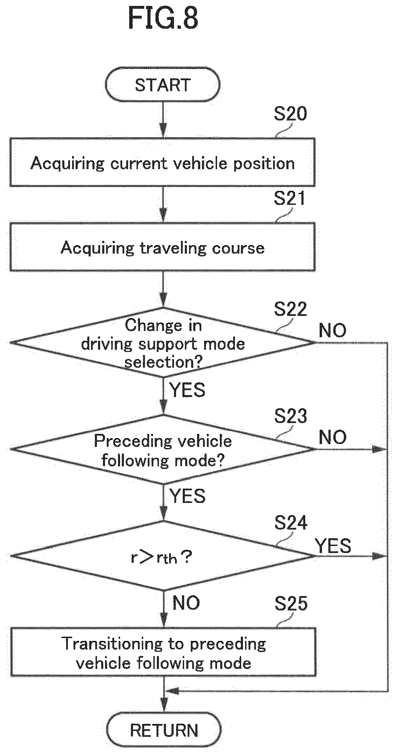

Next, with reference to FIGS. 7 and 8, driving support mode switching processing in the driving support control system 100 according to this embodiment will be described. FIG. 7 is an explanatory diagram of the mode switching processing in a curve section, and FIG. 8 is a processing flow during switching to the preceding vehicle following mode.

In FIG. 7, the vehicle 1 is traveling on a road 7. The road 7 extends from a straight section 7a and connects to a straight section 7c via a curve section 7b. A course Rc in FIG. 7 shows a course passing through the widthwise middle of the road 7. The course Rc has a curvature radius r_{c} in the curve section. A selected one of the driving support modes is a mode normally involving no steering control (the automatic speed control modem, the speed control mode or the basic control mode).

Assume that the driver selects the preceding vehicle following mode by the mode selection switch 36, in the situation as shown in FIG. 7. As shown in FIG. 7, the first traveling course R1 is calculated to enable the vehicle 1 to: pass through an outer side or out-side (on the side of a center Oc of the curve section) of the straight section 7a with respect to the widthwise middle of the road 7, just before entering the curve section 7b; pass through an inner side or in-side of the curve section 7b with respect to the widthwise middle of the road 7; and pass through the out-side of the straight section 7c just after entering the straight section 7c.

As above, in this embodiment, the first traveling course R1 is set to enable the vehicle 1 to basically pass through the widthwise middle of the straight section of the road, and exceptionally pass through the out-side of the straight section just before entering the curve section and just after exiting the curve section. Thus, a curvature radius r (center O_{R1}) of the first traveling course R1 in FIG. 7 is greater than the curvature radius r_{c} of the course Rc. Further, a curvature radius rᵢ of the road 7 measured at an inner edge of the road 7 is naturally less than the curvature radius r (r > r_{c} > rᵢ).

In this embodiment, in mode switching processing for switching to the preceding vehicle following mode, determination regarding a minimum curvature radius r in the first traveling course R1 to be selected after the switching is performed (in a case where the first traveling course R1 includes plural curve sections). That is, when the curvature radius r is equal to or greater than a given threshold radius rₜₕ, the mode transition is permitted, and, on the other hand, when the curvature radius r is less than the given threshold radius rₜₕ, the mode transition is prohibited. Thus, when the first traveling course R1 calculated in a situation the vehicle 1 is located at a position just before a curve section of the road or on the curve section includes a tight curve, the mode transition is prohibited.

Here, a position just before a curve section of a road means a position where a traveling course is calculated by a distance corresponding to a given time period (2 to 4 sec), wherein the calculated traveling course includes the curve section. Thus, for example, such a position is in the range from a start position of the curve section of the road to a position before the curve section by about 100 m, although depending on vehicle speed. Generally, at this position, the driver begins to be concerned about steering manipulation, in preparation for the curve section of the road.

In this embodiment, as one feature, the size of the minimum curvature radius in the first traveling course R1 which becomes the target traveling course after the mode transition is used as a subject of the comparative determination, instead of the size of the curvature radius of the curve section 7b of the actual road 7. Thus, in this embodiment, the mode transition is not prohibited directly only by a curvature radius based on the shape of a road. That is, as long as the minimum curvature radius in the calculated first traveling course R1 is equal to or greater than the threshold radius rₜₕ even in a situation where a curvature radius calculated based on the shape of the road is relatively small (tight curve), the mode transition is permitted.

Next, with reference to FIG. 8, a processing flow during switching to the preceding vehicle following mode will be described. The ECU 10 operates to execute the processing routine in FIG. 8 temporally repeatedly. Here, the processing routine in FIG. 8 may be composed of a part of the traveling course selection processing (S14) in FIG. 6.

First of all, upon start of the processing routine, the ECU 10 operates to acquire a current position of the vehicle 1 in the same manner as that in the step S11 of FIG. 6 (S20), and further acquire the traveling courses calculated in the step S13 of FIG. 6 (S21).

Subsequently, the ECU 10 operates to determine whether or not there is a change in the driving support mode selection signal received from the mode selection switch 36 (S22). When there is no change in the previously-received driving support mode selection signal (S22: NO), i.e., the same driving support mode is continuously selected, the ECU 10 operates to terminate one processing cycle.

On the other hand, when there is a change in the driving support mode selection signal (S22: YES), the ECU 10 operates to determine, based on the changed driving support mode selection signal, whether or not the driver intends to switch from the current driving support mode to the preceding vehicle following mode (S23). When the intended switching destination is not the preceding vehicle following mode (S23: NO), the ECU 10 operates to terminate one processing cycle.

On the other hand, when the intended switching destination is the preceding vehicle following mode (S23: YES), the ECU 10 operates to compare a minimum curvature radius r included in the traveling course (first or second traveling course) to be set upon transition to the preceding vehicle following mode, with the given threshold radius rₜₕ to determine whether or not the curvature radius r is less than the threshold radius rₜₕ (S24).

When the curvature radius r is less than the threshold radius rₜₕ (S24: YES, r < rₜₕ), the ECU 10 operates to terminate one processing cycle.

On the other hand, when the curvature radius r is equal to or greater than the threshold radius rₜₕ (S24: NO, r ≥ rₜₕ), the ECU 10 operates to switch from the current driving support mode to the preceding support mode (S25), and then terminate one processing cycle.

Next, the functions of the driving support control system according to above embodiment will be described.

In the above embodiment, the driving support control device (ECU) 10 is capable of controlling a vehicle 1 in accordance with any one selected from plural driving support modes by a driver. The ECU 10 is configured to temporally repeatedly calculate a target traveling course (first to third traveling courses R1 to R3) along which the vehicle 1 should travel. The ECU 10 is also configured to, in a preceding vehicle following mode, execute control of causing the vehicle 1 to travel on and along the target traveling course. The ECU 10 is operable, when the target traveling course includes a section having a curvature radius r less than a given curvature radius rₜₕ, to prohibit transition to the preceding vehicle following mode, even if the driver selects the preceding vehicle following mode.

In the driving support control device according to the above embodiment, when, at a time of mode switching to the preceding vehicle following mode in which control of causing the vehicle 1 to travel on and along a target traveling course is executed, the target traveling course after the switching includes a section having a curvature radius r less than the given curvature radius rₜₕ, mode transition is prohibited. Thus, when the driver selects the preceding vehicle following mode in a situation where the vehicle 1 is traveling at a position just before a curve section 7b of a road 7 or on the curve section 7b, a case can occur in which switching to the preceding vehicle following mode is disabled, in view of safety. That is, the mode transition is permitted only when it is determined that the vehicle 1 can travel safely after the mode transition.

Specifically, in the above embodiment, the size of the curvature radius r in the road target traveling course is evaluated, instead of evaluating the size of a curvature radius (e.g., r_{c} and rᵢ) of the traveling road. That is, in the above embodiment, permissibility of the mode transition is determined, based on the size of the curvature radius r in the calculated target traveling course. This means that, even if the road 7 includes a tight curve section having a relatively small curvature radius, the mode transition is not always prohibited. Thus, in the above embodiment, by prohibiting the mode transition at the time when the driver selects the driving support mode, it is possible to reduce the probability of stressing the driver. As above, the above embodiment makes it possible to ensure safety and improve usability, in the driving support mode switching processing.

In the above embodiment, the target traveling course is preferably set to pass through the in-side of the curve section of the traveling road. Thus, in the above embodiment, the curvature in the target traveling course can be set to a value greater than the curvature radius based on the shape. This makes it possible to increase the probability of the mode transition, even in a situation where the curvature radius of the traveling road is relatively small.

Although the above embodiment has been described based on an example where a given driving support mode in which the automatic steering control is executed to enable the vehicle 1 to travel along the target traveling course is the preceding vehicle following mode. Alternatively, the given driving support mode may be any different mode. For example, the different mode may include a new driving support mode, and an automatic speed control mode in which the automatic steering control is executed depending on situations.

Further, in the above embodiment, the size of a curvature radius in a traveling course to be set in a driving support mode as a switching declination is used as a subject of the comparative determination. In addition, the target speed in each traveling course may be considered.

### LIST OF REFERENCE SIGNS

1: vehicle
10: driving support control device
35: driver manipulation unit
36: mode selection switch
37: setting vehicle speed input part
38: approval input part
100: driving support control system

## Claims

1. A driving support control device capable of controlling a vehicle in accordance with any one selected from plural driving support modes by a driver, the driving support control device being configured to temporally repeatedly calculate a target traveling course along which the vehicle should travel, and to, in a given one of the driving support modes, execute control of causing the vehicle to travel on and along the target traveling course,
wherein the driving support control device is operable, when the target traveling course includes a section having a curvature radius less than a given curvature radius, to prohibit transition to the given driving support mode, even if the driver selects the given driving support mode.

2. The driving support control device as recited in claim 1, wherein the transition to the given driving support mode is prohibited when the target traveling course includes a section having a curvature radius less than the given curvature radius in a situation where the vehicle is traveling at a position just before a curve section of a traveling road or on the curve section.

3. The driving support control device as recited in claim 1 or 2, wherein the target traveling course is a traveling course set to maintain traveling within a traveling road.

4. The driving support control device as recited in claim 3, wherein the target traveling course is set to pass through an in-side of a curve section of the traveling road.

5. The driving support control device as recited in any one of claims 1 to 4, wherein the driving support control device is operable, in response to a given manipulation by the driver, to start mode switching processing for switching to the driving support mode selected by the driver.

6. The driving support control device as recited in any one of claims 1 to 5, wherein the driving support control device is operable, when the target traveling course includes a section having a curvature radius less than the given curvature radius, at a time when the given driving support mode is selected during execution of a driving support mode other than the given driving support mode, to prohibit transition to the given driving support mode.
